# EUROPEAN PATENT APPLICATION

(11) **EP 2 045 963 A1**
(43) Date of publication of application: **08.04.2009**
(21) Application number: 08706466.3
(22) Date of filing: 03.02.2008
(51) Int. Cl.: H04L 12/24, H04L 12/26

(54) **A METHOD, SYSTEM AND APPARATUS FOR MANAGING TERMINAL DEVICES**

(30) Priority: 15.02.2007 CN 200710073371
(71) Applicant: Huawei Technologies Co., Ltd., Longgang District, Shenzhen Guangdong 518129 (CN)
(72) Inventor: WU, Huangwei, Shenzhen Guangdong 518129 (CN)
(74) Representative: Thun, Clemens
(86) International application number: PCT/CN2008/000285
(87) International publication number: WO 2008/101397

(57) **Abstract**

A method, system, and apparatus for managing terminal devices are disclosed. The method includes: a terminal device checks whether an actual value of its parameter is within a preset range and sends alarm information to a managing device if the actual value of the parameter exceeds the preset range. With the technical solution of the present invention, when the actual value of a terminal parameter exceeds the normal range (or threshold), the terminal device sends a notification to the managing device; when the parameter value changes within a preset range, the terminal device does not notify the managing device, thus relieving the burden of the managing device effectively.

## Description

### Field of the Invention

The present invention relates to Digital Subscriber Line (DSL) technologies, and in particular, to a method, system and apparatus for managing terminal devices.

### Background of the Invention

In an existing technical solution provided by the DSL forum, an Auto-Configuration Server (ACS) in the managing device detects a Customer Premises Equipment (CPE) via the Notification mechanism. After the ACS sets the Notification attribute for a parameter of the CPE, if the value of the parameter changes, the CPE reports the change to the ACS via an Inform message.

Specifically, the ACS uses the Remote Procedure Calls (RPC) method SetParameterValues to set attributes including the Notification attribute of a parameter. If the Notification attribute of a parameter is set to allow sending a notification, the CPE sends the parameter and the updated value to the ACS via the RPC method Inform. In this way, the ACS knows the value of the parameter.

As described above, in the Notification mechanism, when the value of the Notification parameter set previously changes, the CPE reports the updated parameter to the ACS so that the ACS can detect changes in the terminal configuration in real time.

However, the above solution is still subject to the following defects:

In the Notification mechanism, although the number of messages reported by the CPE to the ACS about the change of a parameter value within a specified time is limited, this limit is only effective on the total number, which means, within the specified period of time, once a parameter of the CPE changes, the CPE reports the updated parameter value to the ACS so long as the total number of messages reported within the specified time does not exceed the limit.

For example, for the "Bit Error Rate" parameters, the ACS specifies that the CPE can send at most 10 report messages within one minute. But "Bit Error Rate" is a real-time statistic parameter so its value may change all the time. According to the prior technical solution, the CPE reports the new "Bit Error Rate" to the ACS continuously.

The continuous reporting of the real-time parameter value makes the ACS heavily burdened, and moreover, the ACS may not get an effective alarm when the parameter becomes abnormal for exceeding a preset range.

### Summary of the Invention

Embodiments of the invention intend to provide a terminal device and a method for managing the terminal device, whereby alarms about terminal parameter exceptions can be provided effectively.

To achieve the above objective, embodiments of the invention adopt the following technical solution:

A method for managing terminal devices includes: by a terminal device, checking whether an actual value of its parameter is within a preset range, and sending alarm information to a managing device if the actual value of the parameter exceeds the preset range.

The step of checking whether an actual value of its parameter is within a preset range includes: by the terminal device, checking the actual value of its parameter, comparing the detected actual parameter value with a parameter threshold, and determining that the actual parameter value exceeds the preset range if the actual parameter value exceeds the threshold.

Another method for managing terminal devices includes: setting, by a managing device, a parameter threshold of a terminal device via Remote Procedure Calls (RPC); and enabling alarm upon actual parameter value exception of the terminal device.

In this method, the managing device is an Auto-Configuration Server (ACS), and the terminal device is a Customer Premises Equipment (CPE); and the step of setting a parameter threshold of the terminal device via RPC includes: adding, by the ACS, a parameter threshold related sub-parameter and a notification type related sub-parameter to a parameter attribute structure parameter of the CPE via RPC.

A terminal device includes:
a storage module, adapted to store a parameter threshold; and
a parameter value comparing module, adapted to compare a detected actual parameter value with the parameter threshold stored in the storage module after detecting the actual parameter value and send an instruction according to a comparison result.

A system for managing terminal devices includes: a managing device, adapted to set a parameter threshold and notification type of a terminal device remotely, where the notification type indicates sending a notification when an actual value of the terminal parameter exceeds the parameter threshold.

In embodiments of the present invention, a preset range is set for a parameter of the terminal device. When the parameter value of the terminal device exceeds the normal range, the terminal device sends a notification to the managing device so as to provide alarms about exceptions effectively and relieve the burden of the managing device.

### Brief Description of the Drawings

Figure 1 shows the structure of a terminal device according to an embodiment of the present invention;

Figure 2 shows the procedure of a method for managing terminal devices according to an embodiment of the present invention; and

Figure 3 shows the procedure of a method for managing terminal devices according to another embodiment of the present invention.

### Detailed Description of the Embodiments

For better understanding of the objective, technical solution and advantages of the invention, the present invention is hereinafter described in detail with reference to the embodiments and accompanying drawings. It is understandable that the embodiments described hereinafter are only for explaining the objective of the invention and are not meant to limit the present invention.

An embodiment of the invention provides a method for managing terminal devices, where a terminal device checks whether the actual value of its parameter is within a preset range, and if the actual parameter value exceeds the preset range, the terminal device sends alarm information to a managing device.

The method for the terminal device to check whether the actual value of its parameter is within a preset range is as follows: setting a parameter threshold of the terminal device, and determining that the actual parameter value of the terminal device exceeds the preset range when the actual parameter value of the terminal device is above the upper limit of the threshold or below the lower limit of the threshold.

Another embodiment of the invention discloses a system for managing terminal devices. The system includes a managing device, adapted to set a parameter threshold and notification type of a terminal device remotely, where the notification type means sending a notification when the actual parameter value of the terminal device exceeds the parameter threshold. The system may further include a terminal device, adapted to store the parameter threshold and send a notification to the managing device according to the notification type when the actual parameter value exceeds the parameter threshold. In the embodiments of the invention herein, the managing device is an Automatic-Configuration Server (ACS) and the terminal device is a Customer Premises Equipment (CPE).

Upper and lower threshold limits are set for a CPE parameter. When the actual value of the parameter is above the upper limit of the threshold or below the lower limit of the threshold, the CPE sends alarms to the ACS periodically.

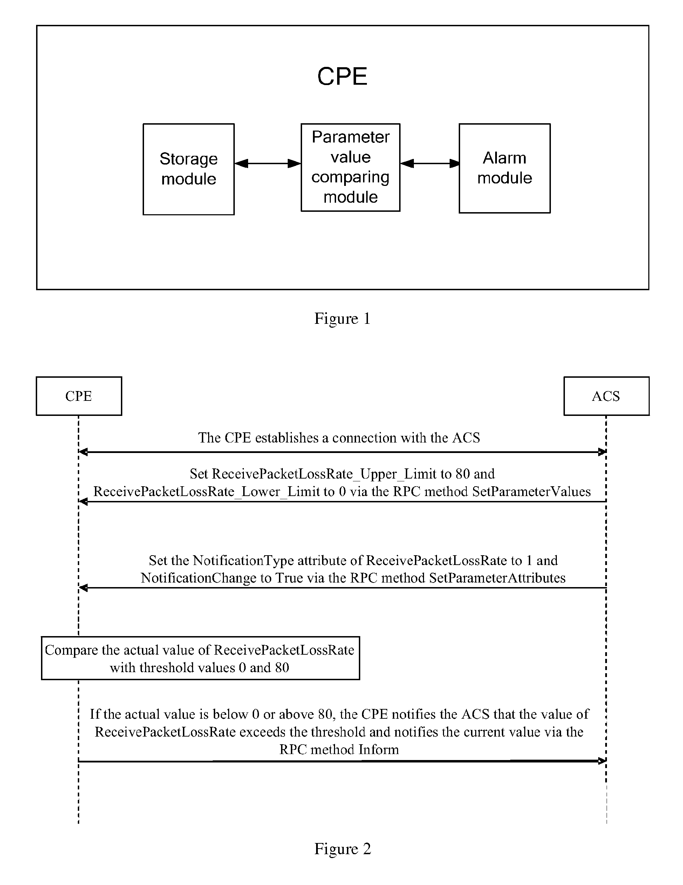

The structure of the CPE provided in an embodiment of the invention is shown in Figure 1. The CPE includes a parameter value comparing module, an alarm module, and a storage module, where: the storage module stores a parameter threshold; the parameter value comparing module checks the actual value of a parameter in real time and compares the actual value with the parameter threshold stored in the storage module; if the actual value of the parameter is above the upper limit of the threshold or below the lower limit of the threshold, the parameter value comparing module triggers the alarm module and the alarm module sends alarm information to the ACS.

In this embodiment of the invention, "VoiceService. {i}.VoiceProfile. {i}.Line.{i}.Stats. ReceivePacketLossRate" is taken as an example for illustration. This parameter is a specific presentation of the measurement of the packet loss rate. The value range is unsigned integers from 0 to 100, which means 0% to 100% packet loss rate. The specific parameter is shown in Table 1.

**Table 1**

| | | | | |
|---|---|---|---|---|
| .VoiceService.{i}.-VoiceProfile.{i}.-Line. {i}.Stats. | Object | - | Statistics for this voice line instance | - |
| .... | | | | |
| ReceivePacketLoss Rate | UnsignedInt [0:100] | - | Current receive packet loss rate in percent | - |
| ... | | | | |

In this embodiment of the invention, suppose the packet loss exceeds a preset reasonable range if the packet loss rate exceeds 80%.

In an embodiment of the method for managing terminal devices disclosed in the present invention, two parameters that indicate the upper limit and lower limit of packet loss rate are added to the data model (in fact, for the packet loss rate, it is unnecessary to define a lower limit; herein a lower limit is added for the universality of the solution): ReceivePacketLossRate_Upper_Limit and ReceivePacketLossRate_Lower_Limit.

| | | | | |
|---|---|---|---|---|
| VoiceService.{i}.-VoiceProfile.{i}.-Line. {i} .Stats. | Object | - | Statistics for this voice line instance - | - |
| ... | | | | |
| ReceivePacketLoss Rate | UnsignedInt [0:100] | - | Current receive packet loss rate in percent | - |
| ReceivePacketLoss Rate_Upper_Limit | UnsingedInt | W | Upper limit of packet loss rate | |
| ReceivePacketLoss Rate_Lower_Limit | UnsignedInt | W | Lower limit of packet loss rate | |

Currently, there is only one notification mode. When a parameter attribute is set, the default mode is notification upon value change. To implement the technical solution of the present invention, it is also necessary to add a threshold based notification mode. Therefore, when the notification attribute of ReceivePacketLossRate is set, the parameter NotificationType should be added to specify which notification type to use. Likewise, it is also necessary to make the same extension for the GetParameterAttributes method.

Specifically, it is practical to extend the SetParameterAttributesStruct parameter of the existing RPC method SetParameterAttributes to add a sub-parameter NotificationType, of which the value 0 indicates notification upon value change and 1 indicates notification upon threshold crossing. Likewise, it is necessary to make the same extension for the ParameterAttributeStruct parameter in the GetParameterAttributes method.

The extended SetParameterAttributesStruct parameter is described in Table 2.

**Table 2**

| Name | Type | Description |
|---|---|---|
| Name | String(256) | This is the name of a Parameter to apply the new attributes. Alternatively, this may be a partial path name, indicating that the new attributes are to be applied to all Parameters below this point in the naming hierarchy. A partial path name must end with a "." (dot) after the last node name in the hierarchy. An empty string indicates the top of the name hierarchy. Below is an example of a full Parameter name: InternetGatewayDevice.DeviceInfo.SerialNumber Below is an example of a partial path name: InternetGatewayDevice.DeviceInfo. |
| NotificaitonType | Int[0:1] | 0 indicates notification upon value change; 1 indicates notification upon threshold crossing. |
| NotificationChange | Boolean | If the value is True, it indicates using the new Notification value to replace the notification attribute set for the current parameter or the current group of parameters; if the value is False, it indicates no change will be made to the notification setting. |
| ... | | |

After the threshold related parameters are added in the data model and the notification mode related parameter NotificationType is added in the parameter SetParameterAttributesStruct, the ACS sets ReceivePacketLossRate_Upper_Limit to 80 and ReceivePacketLossRate_Lower_Limit to 0 via the RPC method SetParameterValue.

Then, via the RPC method SetParameterAttribution, the ACS sets the attribute of the NotificationType sub-parameter of ReceivePacketLossRate to 1, and sets NotificationChange to True so as to enable the notification function on the ReceivePacketLossRate parameter. In this way, when the value of VoiceService.{i}.VoiceProfile.{i}.Line.{i}.Stats. ReceivePacketLossRate exceeds the threshold 80, the CPE sends a notification to the ACS. In practice, this notification may carry the current value of the parameter.

A procedure according to this embodiment is shown in Figure 2, including the following steps:

1. A connection is set up between the ACS and the CPE;

2. The ACS sets ReceivePacketLossRate_Upper_Limit to 80 and sets ReceivePacketLossRate_Lower_Limit to 0 via the RPC method SetParameterValues;

3. The ACS sets the attribute of the NotificationType sub-parameter of ReceivePacketLossRate to 1 via the RPC method SetParameterAtrributs, and sets its NotificationChange to True via the RPC method SetParameterAttributes to enable the alarm function on ReceivePacketLossRate;

4. The CPE checks the actual value of ReceivePacketLossRate and compares the detected value with 80, the set value of ReceivePacketLossRate_Upper_Limit, and with 0, the set value of ReceivePacketLossRate_Lower_Limit; and

5. If the actual value of ReceivePacketLossRate is above 80 or below 0, the CPE sends alarm information to the ACS via the RPC method Inform.

In another embodiment of the method for managing terminal devices of the present invention, the upper limit and lower limit parameters of ReceivePacketLossRate are defined in the data model. In this embodiment, the upper limit and lower limit parameters are defined in the attributes of the parameter ReceivePacketLossRate.

Because attributes of a parameter are invisible in the data model, the ACS can only set parameter attributes via SetParameterAttributes and get parameter attributes via GetParameterAttributes.

First, it is necessary to extend the SetParameterAttributesStruct parameter of SetParameterAttributes to add a sub-parameter NotificationType, of which the value 0 indicates notification upon value change and 1 indicates notification upon threshold crossing. In addition, the sub-parameters UpperLimit and LowerLimit are added, where the value of UpperLimit specifies the upper limit of ReceivePacketLossRate and the value of LowerLimit specifies the lower limit of ReceivePacketLossRate. Likewise, it is also necessary to extend the ParameterAttributeStruct parameter of GetParameterAttributes. The extended SetParameterAttributesStruct parameter is described in Table 3.

**Table 3**

| Name | Type | Description |
|---|---|---|
| Name | string(256) | This is the name of a Parameter to apply the new attributes. Alternatively, this may be a partial path name, indicating that the new attributes are to be applied to all Parameters below this point in the naming hierarchy. A partial path name must end with a "." (dot) after the last node name in the hierarchy. An empty string indicates the top of the name hierarchy. Below is an example of a full Parameter name: InternetGatewayDevice.DeviceInfo.SerialNumber Below is an example of a partial path name: InternetGatewayDevice.DeviceInfo. |
| NotificaitonType | Int[0:1] | 0 indicates notification upon value change; 1 indicates notification upon threshold crossing. |
| UpperLimit | Int | Upper limit. |
| LowerLimit | Int | Lower limit. |
| NotificationChange | boolean | If the value is True, it indicates using the new Notification value to replace the notification attribute set for the current parameter or the current of parameters; if the value is False, it indicates no change will be made to the notification setting. |
| ... | | |

After the foregoing parameter extension, the ACS sets the sub-parameter UpperLimit in Table 3 to 80 and LowerLimit to 0 via the RPC method SetParameterAttribution.

Then, via the RPC method SetParameterAttribution, the ACS sets the attribute of the NotificationType sub-parameter of ReceivePacketLossRate to 1, and sets NotificationChange to True so as to enable the notification function on the ReceivePacketLossRate parameter. In this way, when the value of ReceivePacketLossRate exceeds the threshold 80, the CPE sends a notification to the ACS. In practice, this notification may carry the current value of the parameter.

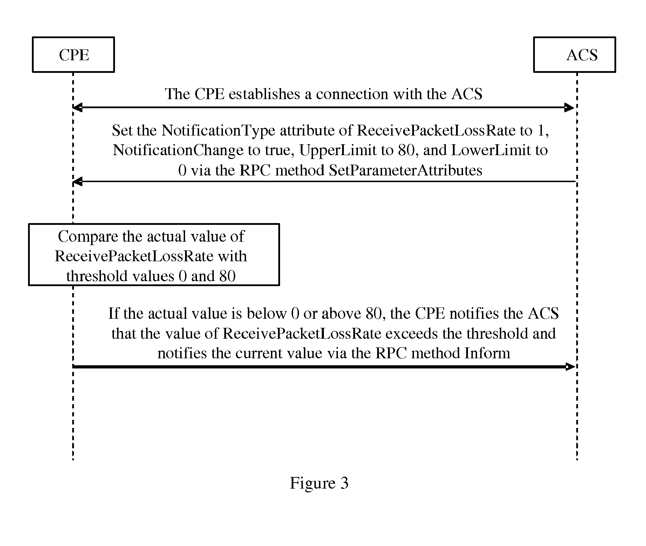

A procedure according to this embodiment is shown in Figure 3, including the following steps:

1. A connection is set up between the ACS and the CPE;

2. The ACS sets UpperLimit of ParameterAttributeStruct to 80 and sets LowerLimit to 0 via the RPC method SetParameterAttributes and sets the attribute of NotificationType of ReceivePacketLossRate to 1 and sets NotificationChange to True via the method SetParameterAttributes to enable the alarm function on ReceivePacketLossRate;

3. The CPE checks the actual value of ReceivePacketLossRate and compares the detected value with 80, the set value of UpperLimit, and with 0, the set value of LowerLimit; and

4. If the actual value of ReceivePacketLossRate is above 80 or below 0, the CPE sends alarm information to the ACS via the RPC method Inform.

In practice, there may be multiple thresholds for a specified parameter; or it may be necessary to consider multiple threshold values including an upper limit and a lower limit for some parameters; or it may be necessary to consider only an upper limit or a lower limit for other parameters. When the actual value of a parameter crosses the threshold, the CPE may send one alarm to the ACS, or send multiple alarms periodically (when the parameter value is still beyond the normal range). When the actual value of the parameter returns to the normal range, the CPE may notify the ACS or not notify the ACS, depending on the actual needs.

As described above, the technical solution provided by embodiments of the invention sets thresholds for a CPE parameter. When the actual value of the CPE parameter is above the upper limit or below the lower limit of the threshold, the CPE sends a notification to the ACS to complete alarming; when the actual parameter value is above the lower limit and below the upper limit of the threshold, the CPE need not notify the ACS. Therefore, when the value of a CPE parameter exceeds the normal range, for example, when Bit Error Rate or Packet Loss Rate exceeds the normal range (or threshold), the CPE sends a notification to the ACS, notifying the ACS of exceptions of the CPE parameter effectively. Further, when the value of the parameter changes within a reasonable range, the CPE does not notify the ACS, and thus effectively relieves the burden of the ACS.

It should be appreciated that the foregoing is only preferred embodiments of the invention and is not for use in limiting the invention. Any modification, equivalent substitution, and improvement without departing from the spirit and principle of this invention should be covered in the scope of protection of the invention.

## Claims

1. A method for managing terminal devices, comprising:
by a terminal device, checking whether an actual value of its parameter is within a preset range, and sending alarm information to a managing device if the actual value of the parameter exceeds the preset range.

2. The method of claim 1, wherein the step of checking whether an actual value of its parameter is within a preset range comprises:
by the terminal device, checking the actual value of its parameter, comparing the detected actual parameter value with a parameter threshold, and determining that the actual parameter value exceeds the preset range if the actual parameter value exceeds the threshold.

3. The method of claim 1, wherein the threshold is set by the managing device for the parameter of the terminal device.

4. The method of claim 1, wherein:
the terminal device is a Customer Premises Equipment (CPE); and
the threshold is implemented by adding a sub-parameter to a data structure of the CPE.

5. The method of claim 4, wherein the sub-parameter is set by an Auto-Configuration Server (ACS) via Remote Procedure Calls (RPC).

6. The method of claim 5, wherein the step of sending alarm information to the managing device comprises:
notifying, by the CPE, the ACS that the actual value of the parameter exceeds the threshold of the parameter via an RPC method.

7. The method of claim 5, wherein the step of the CPE notifying the ACS of alarm information comprises:
notifying, by the CPE, the ACS that the actual value of the parameter exceeds the threshold of the parameter via an RPC method.

8. The method of any of claims 1-6, wherein the terminal device does not send the actual value of the parameter to the managing device if the actual value of the parameter is within the preset range.

9. A method for managing terminal devices, comprising:
setting, by a managing device, a parameter threshold of a terminal device via Remote Procedure Calls (RPC); and
enabling alarm upon actual parameter value exception of the terminal device.

10. The method of claim 9, wherein the managing device is an Auto-Configuration Server (ACS), and the terminal device is a Customer Premises Equipment (CPE); and the step of setting a parameter threshold of the terminal device via RPC comprises:
adding, by the ACS, a parameter threshold related sub-parameter and a notification type related sub-parameter to a parameter attribute structure parameter of the CPE via RPC.

11. The method of claim 10, wherein the step of adding a parameter threshold related sub-parameter and a notification type related sub-parameter to a parameter attribute structure parameter of the CPE via RPC comprises:
by the ACS, setting the parameter threshold related sub-parameter and setting the notification type related sub-parameter to alarm upon threshold crossing via RPC.

12. The method of claim 11, wherein the parameter attribute structure parameter is SetParameterAttributesStruct; and the step of setting the notification type related sub-parameter to alarm upon threshold crossing comprises:
the notification type sub-parameter is NotificationType; when NotificationType is set to 1 via RPC, alarm upon threshold crossing of the terminal device is enabled; and
when NotificationType is set to 0 via RPC, alarm upon value change is enabled.

13. A terminal device, comprising:
a storage module, adapted to store a parameter threshold; and
a parameter value comparing module, adapted to compare a detected actual parameter value with the parameter threshold stored in the storage module after detecting the actual parameter value, and send an instruction according to a comparison result.

14. The terminal device of claim 13, further comprising:
an alarm module, adapted to send alarm information to a managing device according to the instruction of the parameter value comparing module.

15. The terminal device of claim 14, wherein the storage module is further adapted to store an upper limit and/or a lower limit of a parameter; and
the parameter value comparing module is further adapted to:
compare the actual parameter value with the parameter upper limit and/or lower limit and send an instruction, notifying the alarm module to alarm the managing device when the actual parameter value is above the parameter upper limit or below the parameter lower limit.

16. The terminal device of claim 14, wherein the storage module is further adapted to:
update the threshold of the parameter according to setting of the managing device.

17. The terminal device of claim 16, wherein the managing device is an Auto-Configuration Server (ACS) and the setting is implemented by the ACS via RPC and the alarm module is further adapted to:
notify the ACS that the actual value of the parameter exceeds the threshold of the parameter via an RPC method.

18. The terminal device of any of claims 14-17, wherein the parameter is Packet Loss Rate or Bit Error Rate.

19. A system for managing terminal devices, comprising:
a managing device, adapted to set a parameter threshold and notification type of a terminal device remotely, wherein the notification type indicates sending a notification when an actual value of the terminal parameter exceeds the parameter threshold.

20. The system of claim 19, further comprising:
a terminal device, adapted to store the parameter threshold and send a notification to the managing device according to the notification type when the actual parameter value exceeds the parameter threshold.

21. The system of claim 19, wherein the managing device is an Auto-Configuration Server (ACS), the terminal device is a Customer Premises Equipment (CPE) and the remote setting is implemented via Remote Procedure Calls (RPC).
